# EUROPEAN PATENT SPECIFICATION

(11) **EP 4 074 454 B1**
(45) Date of publication and mention of the grant of the patent: **02.04.2025**
(21) Application number: 20899545.6
(22) Date of filing: 11.12.2020
(51) Int. Cl.: B23K 26/042, B23K 26/00, B23K 26/04, B23K 26/06, B23K 26/70

(54) **LASER DEVICE AND METHOD FOR CONTROLLING LASER DEVICE**
LASERVORRICHTUNG UND VERFAHREN ZUM STEUERN EINER LASERVORRICHTUNG
DISPOSITIF LASER ET PROCÉDÉ DE COMMANDE DE DISPOSITIF LASER

(30) Priority: 13.12.2019 JP 2019225486; 13.12.2019 JP 2019225487
(43) Date of publication of application: 19.10.2022
(73) Proprietor: Panasonic Intellectual Property Management Co., Ltd., Osaka-shi, Osaka 540-6207 (JP)
(72) Inventor: ISHIKAWA, Ryo, Osaka-shi, Osaka 540-6207 (JP); KATO, Naoya, Osaka-shi, Osaka 540-6207 (JP)
(74) Representative: Novagraaf International SA
(86) International application number: PCT/JP2020/046378
(87) International publication number: WO 2021/117892

(56) References cited:
- WO-A1-2019/176502
- WO-A1-2019/176502
- CN-A- 105 846 294
- JP-A- 2005 088 053
- JP-A- 2019 155 446
- JP-A- H08 167 754
- US-A1- 2004 114 935
- US-A1- 2007 189 339
- US-A1- 2013 335 798

## Description

### TECHNICAL FIELD

The technique disclosed herein is directed to a laser device and a method of controlling the laser device.

### BACKGROUND ART

Patent Document 1 discloses a laser oscillator including a laser source that emits laser light, and a light-condensing optical unit that reduces the laser light at a predetermined magnification and condenses the laser light at an incident end of a transmission fiber. The light-condensing optical unit includes an optical component configured to form an image of the incident laser light at a predetermined focal point and capable of changing a focal length.

### CITATION LIST

### PATENT DOCUMENT

Patent Document 1: Japanese Unexamined Patent Publication No. 2020-060725

The document US 2004/114935 discloses a laser device for irradiating an object to be irradiated, with laser light, the laser device comprising: a laser source configured to emit the laser light; an optical system configured to irradiate the object with the laser light emitted from the laser source, and capable of changing a beam profile of the laser light projected on the object; a profile detection unit configured to detect the beam profile of the laser light emitted from the optical system to the object; and a control unit configured to control the optical system in each predetermined control cycle so that the beam profile detected by the profile detection unit is a desired beam profile.

Further art is disclosed by the documents JP 2019 155446, US 2007/189339, US 2013/335798 and CN 105 846 294.

### SUMMARY OF THE INVENTION

### TECHNICAL PROBLEM

In the device according to Patent Document 1, however, if there is a deviation of the optical path of the optical system that guides the laser light emitted from the laser source to the object (i.e., the incident end of the transmission fiber in Patent Document 1) to be irradiated, the beam profile of the laser light projected onto the object fluctuates.

To address the problem, it is an objective of the technique disclosed herein to provide a laser device capable of reducing the fluctuations in the beam profile of laser light caused by a deviation of the optical path of an optical system.

### SOLUTION TO THE PROBLEM

The technique disclosed herein is directed to a laser device for irradiating an object to be irradiated according to independent claim 1, and to a method of controlling a laser device according to independent claim 8.

### ADVANTAGES OF THE INVENTION

The technique disclosed herein reduces the fluctuations in the beam profile of laser light caused by a deviation of the optical path of an optical system.

### BRIEF DESCRIPTION OF THE DRAWINGS

FIG. 1 is a schematic diagram illustrating a configuration of a laser processing system according to a first embodiment.
FIG. 2 is a schematic diagram illustrating a configuration of a laser device according to the first embodiment.
FIG. 3 is a table illustrating a relationship among incident conditions of laser light, incident conditions of partial light, and a beam profile.
FIG. 4 is a flowchart illustrating an operation of a control unit according to the first embodiment.
FIG. 5 is a flowchart illustrating an operation of a control unit according to a second embodiment.
FIG. 6 is a flowchart illustrating an operation of a control unit according to a first variation of the second embodiment.
FIG. 7 is a flowchart illustrating an operation of a control unit according to a second variation of the second embodiment.
FIG. 8 is a flowchart illustrating an operation of a control unit according to a third embodiment.
FIG. 9 is a flowchart illustrating an operation of a control unit according to a fourth embodiment.
FIG. 10 is a schematic diagram illustrating a configuration of a laser device according to a fifth embodiment.
FIG. 11 is a flowchart illustrating an operation of a control unit according to the fifth embodiment.
FIG. 12 is a schematic diagram illustrating a configuration of a laser device according to a sixth embodiment.
FIG. 13 is a flowchart illustrating an operation of a control unit according to the sixth embodiment.
FIG. 14 is a schematic diagram illustrating a configuration of a laser device according to another embodiment.

### DESCRIPTION OF EMBODIMENTS

Now, embodiments will be described in detail with reference to the drawings. The same reference characters are used to represent equivalent elements, and redundant explanation will be omitted.

### (First Embodiment)

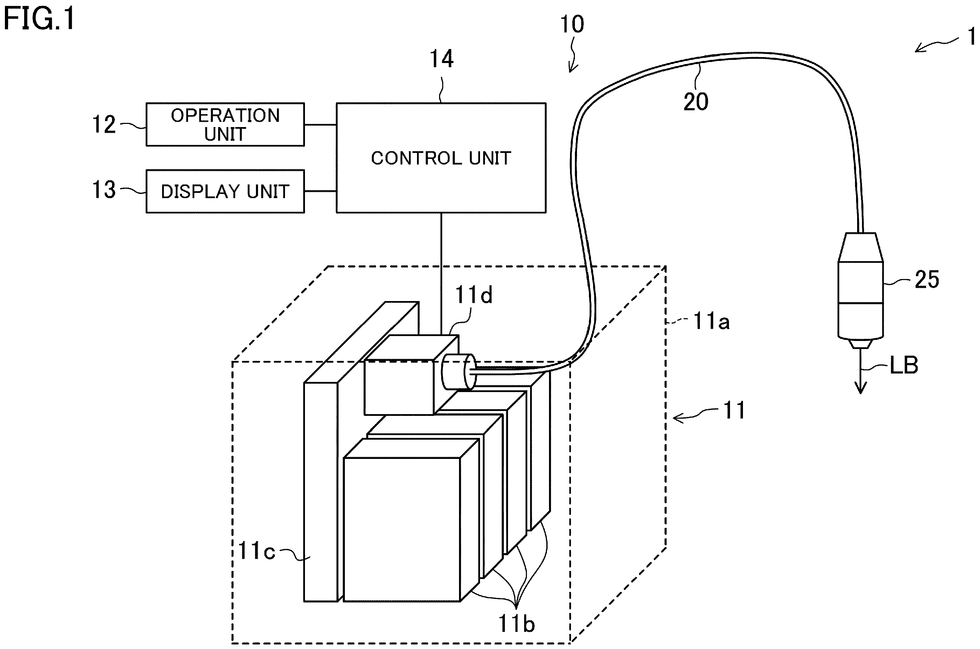

FIG. 1 illustrates a configuration of a laser processing system 1 according to a first embodiment. The laser processing system 1 processes a workpiece (not shown) using laser light LB. Specifically, the laser processing system 1 cuts the workpiece by irradiating the workpiece with the laser light LB. In this example, the laser processing system 1 includes a laser device 10, an optical fiber 20, and an output head 25. The laser device 10 irradiates an end (or an end surface) of the optical fiber 20 with the laser light LB. The end of the optical fiber 20 is an example of an object to be irradiated.

### [Optical Fiber]

The optical fiber 20 has one end connected to a laser oscillator 11, which will be described later, of the laser device 10, and the other end connected to the output head 25. The optical fiber 20 guides the laser light LB emitted from the laser device 10 to the output head 25.

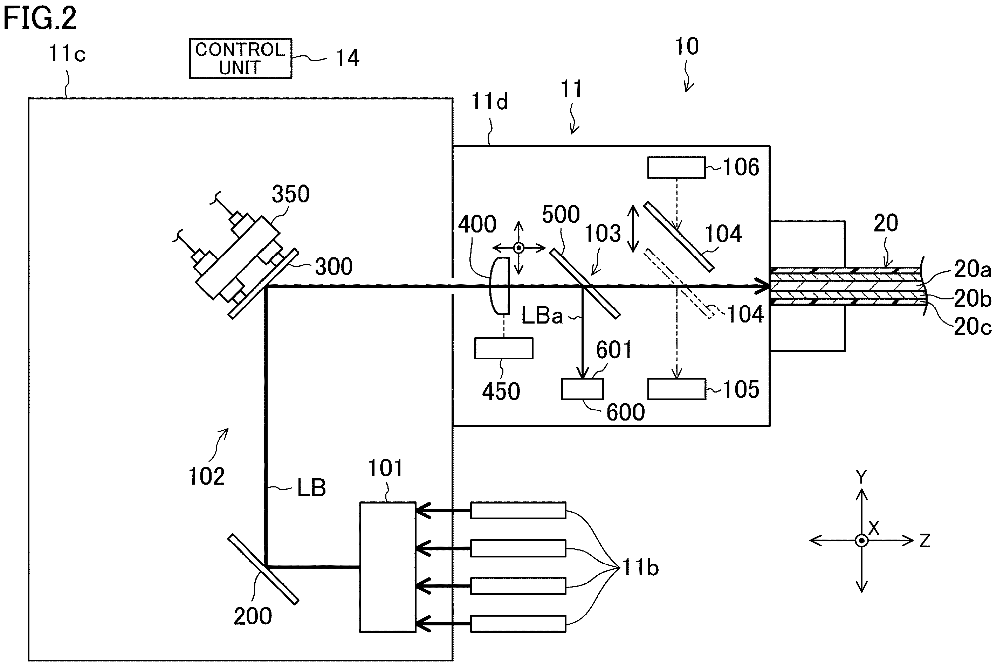

As shown in FIG. 2, in this example, the optical fiber 20 includes a first core 20a, a second core 20b surrounding the first core 20a, and a coating 20c surrounding the second core 20b. The first core 20a has a circular cross section. The second core 20b has an annular cross section. A first cladding (not shown) is interposed between the second core 20b and the coating 20c. A second cladding (not shown) is interposed between the first and second cores 20a and 20b. The first and second claddings have lower refractive indices than the first and second cores 20a and 20b. The second cladding may be omitted, and the first core 20a may have a higher refractive index than the second core 20b.

### [Output Head]

The output head 25 irradiates a workpiece (not shown) with the laser light LB guided by the optical fiber 20.

### [Laser Device]

In this example, the laser device 10 includes the laser oscillator 11, an operation unit 12, a display unit 13, and a control unit 14.

### [Laser Oscillator]

The laser oscillator 11 irradiates the end of the optical fiber 20, which is connected to the laser oscillator 11 and serves as the object to be irradiated, with laser light LB. The laser oscillator 11 includes a housing 11a, a plurality of laser modules 11b, a coupling unit 11c, and a condensing unit 11d. In this example, the laser oscillator 11 is a direct diode laser (DDL) oscillator.

The housing 11a houses the laser modules 11b, the coupling unit 11c, and the condensing unit 11d. Each of the laser modules 11b emits laser light. For example, each laser module 11b includes a laser array of laser diodes (not shown) that emit laser beams with different wavelengths. The laser module 11b performs wavelength beam combining of the laser beams emitted from the laser diodes, and emits the combined laser beams as laser light. The outputs of the laser module 11b may be variable. The outputs of the laser module 11b may be controlled by the control unit 14.

As shown in FIG. 2, the laser oscillator 11 includes a laser source 101, an optical system 102, a profile detection unit 103, a shutter 104, and a beam damper 105. The laser source 101 is located in the coupling unit 11c. In this example, the laser source 101 is a coupler that couples the laser light emitted from the laser modules 11b. The optical system 102 is located in the coupling unit 11c and the condensing unit 11d. The profile detection unit 103, the shutter 104, and the beam damper 105 are located in the condensing unit 11d.

### [Laser Source]

The laser source 101 emits laser light LB. The laser source 101 serves as a coupler to couple the laser light emitted from the laser modules 11b and emit the coupled laser light as the laser light LB. For example, the laser source 101 serving as a coupler includes a plurality of optical components such as a mirror, a lens, and a beam splitter. The outputs of the laser source 101 may be variable. The outputs of the laser source 101 may be controlled by the control unit 14.

Instead of a coupler, the laser source 101 may be configured as an excitation unit including the laser modules 11b. With this configuration, the laser source 101 serving as an excitation unit combines the laser light emitted from the laser modules 11b and emits the combined laser light as the laser light LB.

### [Optical System]

The optical system 102 irradiates the end of the optical fiber 20 as the object to be irradiated, with the laser light LB emitted from the laser source 101. The optical system 102 can change the beam profile of the laser light LB to be projected onto the object.

In this example, the optical system 102 includes a first reflecting mirror 200, a second reflecting mirror 300, and a condensing lens 400. The first and second reflecting mirrors 200 and 300 are located in the coupling unit 11c. The condensing lens 400 is located in the condensing unit 11d.

In the following description, the direction orthogonal to the drawing plane of FIG. 2 is referred to as the "X-axis direction," the left-right direction in the drawing plane of FIG. 2 is referred to as the "Y-axis direction" orthogonal to the X-axis direction, and the up-down direction in the drawing plane of FIG. 2 is referred to as the "Z-axis direction" orthogonal to both the X-axis direction and the Y-axis direction. The condensing lens 400, a partial reflection mirror 500, and the shutter 104 in a closed state are aligned along the Z-axis direction between the second reflecting mirror 300 and the end of the optical fiber 20.

### <First Reflecting Mirror>

The first reflecting mirror 200 reflects the laser light LB emitted from the laser source 101 in a direction different from the traveling direction of the emitted laser light LB to guide the laser light LB to the second reflecting mirror 300.

### <Second Reflecting Mirror>

The second reflecting mirror 300 reflects the laser light LB reflected by the first reflecting mirror 200 in a direction different from the traveling direction of the laser light LB reflected by the first reflecting mirror 200 to guide the laser light LB to the end of the optical fiber 20.

In this example, the second reflecting mirror 300 can be oscillated so that the reflection surface of the second reflecting mirror 300 is inclined at a variable angle from the optical path of the laser light LB incident on the reflection surface of the second reflecting mirror 300. Specifically, the coupling unit 11c has a mirror driving mechanism 350 for driving the second reflecting mirror 300. The mirror driving mechanism 350 oscillates the second reflecting mirror 300 about a predetermined oscillation axis so that the reflection surface of the second reflecting mirror 300 is inclined at the variable angle. In this example, the direction of the oscillation axis of the second reflecting mirror 300 is the X-axis direction. The travel direction of the laser light LB incident on the second reflecting mirror 300 is the Y-axis direction. The direction from the second reflecting mirror 300 toward the end of the optical fiber 20 is the Z-axis direction. The oscillation of the second reflecting mirror 300 (specifically, the mirror driving mechanism 350) is controlled by the control unit 14.

The mirror driving mechanism 350 includes a piezo stage and a piezo actuator. The second reflecting mirror is attached to the piezo stage. The piezo actuator is attached to the piezo stage. Once the piezo actuator is driven, the oscillation angle of the piezo stage and the second reflecting mirror 300 changes. As a result, the angle at which the reflection surface is inclined from the optical path of the laser light LB incident on the second reflecting mirror 300 changes, which also changes the position of the spot of the laser light LB projected onto the end of the optical fiber 20.

### <Condensing Lens>

The condensing lens 400 is located on the optical path of the laser light LB from the second reflecting mirror 300 toward the end of the optical fiber 20 to condense the laser light LB. In this example, the condensing lens 400 condenses the laser light LB so that the spot of the laser light LB at the end of the optical fiber 20 has a diameter smaller than the first core 20a of the optical fiber 20.

In this example, the condensing lens 400 is movable in the X-, Y-, and Z-axis directions. Specifically, the condensing unit 11d includes a lens driving mechanism 450. The lens driving mechanism 450 supports the condensing lens 400 and moves the condensing lens 400 in the X-, Y-, and Z-axis directions. The position of the condensing lens 400 (specifically, the lens driving mechanism 450) is controlled by the control unit 14.

### [Profile Detection Unit]

The profile detection unit 103 detects the beam profile of the laser light LB emitted from the optical system 102 to the optical fiber 20. In this example, the beam profile detected by the profile detection unit 103 includes information on the position of the spot of the laser light LB at the end of the optical fiber 20. The profile detection unit 103 includes the partial reflection mirror 500 and a partial light receiver 600.

### <Partial Reflection Mirror>

The partial reflection mirror 500 reflects part of the laser light LB traveling from the condensing lens 400 toward the end of the optical fiber 20. The remaining part of the laser light LB traveling from the condensing lens 400 toward the end of the optical fiber 20 passes through the partial reflection mirror 500. For example, 0.01% of the laser light LB traveling from the collection lens 400 toward the end of the optical fiber 20 is reflected by the partial reflection mirror 500, and 99.99% of the laser light LB traveling from the condensing lens 400 toward the end of the optical fiber 20 passes through the partial reflection mirror 500.

### <Partial Light Receiver>

The partial light receiver 600 receives part of the laser light LB (hereinafter referred to as "partial light LBa") reflected by the partial reflection mirror 500 that reflects part of the laser light LB traveling from the condensing lens 400 toward the end of the optical fiber 20. The partial light receiver 600 then outputs an electrical signal corresponding to the conditions (e.g., the position and the intensity) of receiving the partial light LBa. The outputs of the partial light receiver 600 are transmitted to the control unit 14.

In this example, the partial light receiver 600 has a light receiving surface 601 that receives the partial light LBa. The light receiving surface 601 is divided into a plurality of unit areas arranged in a matrix. The partial light receiver 600 then outputs an electrical signal corresponding to the intensity of the received partial light LBa for each unit area of the light receiving surface 601.

Specifically, the partial light receiver 600 includes the light receiving surface 601 and a plurality of light receiving elements (not shown). The light receiving elements are arranged in a matrix on the light receiving surface 601. In other words, the light receiving elements of the partial light receiver 600 are located in the unit areas of the light receiving surface 601, respectively. The outputs of the light receiving elements of the partial light receiver 600 are transmitted to the control unit 14.

### [Shutter]

The shutter 104 is switchable between open and closed states. In the open state, the shutter 104 allows the laser light LB traveling from the second reflecting mirror 300 toward the end of the optical fiber 20 (via the condensing lens 400 and the partial reflection mirror 500 in this example) to enter the end of the optical fiber 20. In the closed state, the shutter 104 prohibits the laser light LB traveling from the second reflecting mirror 300 toward the end of the optical fiber 20 from entering the end of the optical fiber 20.

In this example, the shutter 104 is movable in the Y-axis direction, and can be placed at an open position (indicated by a solid line in FIG. 2) and a closed position (indicated by a two-dot chain line in FIG. 2). The open position is away from the optical path of the laser light LB traveling toward the end of the optical fiber 20. The closed position is on the optical path of the laser light LB traveling toward the end of the optical fiber 20. If the shutter 104 is located at the open position, the laser light LB traveling toward the end of the optical fiber 20 enters the end of the optical fiber 20. If the shutter 104 is located at the closed position, the shutter 104 reflects, toward the beam damper 105, the laser light LB traveling toward the end of the optical fiber 20.

Specifically, the condensing unit 11d includes a shutter driving mechanism 106. The shutter driving mechanism 106 supports the shutter 104 and moves the shutter 104 in the Y-axis direction. The opening and closing of the shutter 104 (specifically, the shutter driving mechanism 106) is controlled by the control unit 14.

### [Beam Damper]

The beam damper 105 receives the laser light LB reflected by the shutter 104 in the closed state and consumes the laser light LB by converting the laser light LB into heat.

### [Operation Unit and Display Unit]

The operation unit 12 is operated by an operator and outputs a signal corresponding to the operation by the operator. With such a configuration, the operator inputs information by operating the operation unit 12. The outputs of the operation unit 12 are transmitted to the control unit 14. For example, the operation unit 12 may be an operation button pressed by the operator, or an operation unit of a touch panel. The display unit 13 displays information. For example, the display unit 13 may be a display unit of a touch panel.

### [Control Unit]

The control unit 14 is electrically connected to each unit of the laser device 10 and capable of transmitting signals to and from the unit of the laser device 10. In this example, the control unit 14 is electrically connected to each unit (e.g., the laser source 101) of the laser oscillator 11, the operation unit 12, and the display unit 13. The control unit 14 controls each unit of the laser device 10. For example, the control unit 14 controls the oscillation of the second reflecting mirror 300, the position of the condensing lens 400, and the opening and closing of the shutter 104, for example. In this example, the control unit 14 is electrically connected to each unit (e.g., the output head 25) of the laser processing system 1 and controls the unit of the laser processing system 1. For example, the control unit 14 includes a processor and a memory that stores programs and information for operating the processor. The operation of the control unit 14 will be described later in detail.

### [Relationship between Incident Conditions of Laser Light, Incident Conditions of Partial Light, and Beam Profile]

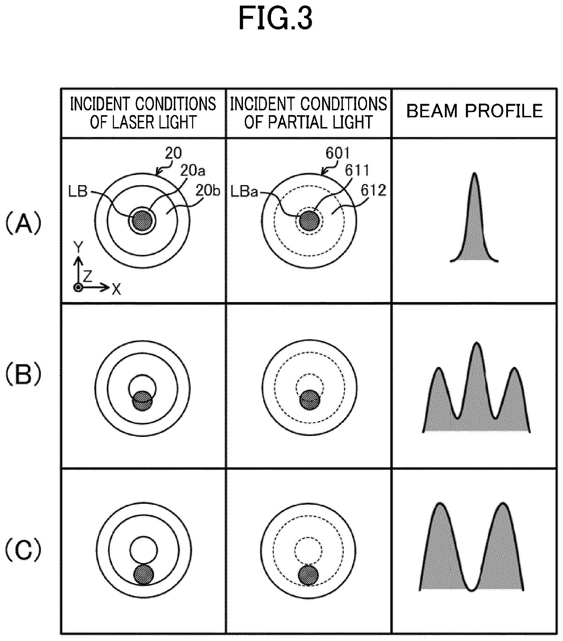

FIG. 3 illustrates a relationship among incident conditions of the laser light LB, incident conditions of the partial light LBa, and a beam profile. The light receiving surface 601 of the partial light receiver 600 includes a first area 611 corresponding to the first core 20a of the optical fiber 20, and a second area 612 corresponding to the second core 20b of the optical fiber 20.

As shown in FIG. 3, assume that there is a change in the conditions (i.e., the position and the diameter (or shape)) of the spot, which are the incident conditions of the laser light LB at the end of the optical fiber 20. With this change, the incident conditions of the partial light LBa received by the light receiving surface 601 of the partial light receiver 600 change. In addition, the beam profile of the laser light LB (e.g., the laser light LB emitted from the output head 25 via the optical fiber 20) changes. The beam profile of the laser light LB tends to change more significantly in accordance with the change in the position of the spot, which is one of the incident conditions of the laser light LB, when the position of the spot of the laser light LB changes at the boundary between the first and second cores 20a and 20b than at the first or second core 20a or 20b.

As shown in FIG. 3, the incident conditions (i.e., the position and the diameter) of the spot of the partial light LBa on the light receiving surface 601 of the partial light receiver 600 corresponds to the incident conditions (i.e., the position and the diameter) of the spot of the laser light LB at the end of the optical fiber 20. The position (or diameter) of the spot of the partial light LBa on the light receiving surface 601 of the partial light receiver 600 changes in accordance with a change in the position (or diameter) of the spot of the laser light LB at the end of the optical fiber 20.

For example, assume that the spot of the laser light LB is located at the first core 20a (or the second core 20b) of the optical fiber 20. In this case, the spot of the partial light LBa is located in the first area 611 (or the second area 612) of the light receiving surface 601 of the partial light receiver 600. On the other hand, assume that the spot of the laser light LB is located at the boundary between the first and second cores 20a and 20b of the optical fiber 20. In this case, the spot of the partial light LBa is located at the boundary between the first and second areas 611 and 612 of the light receiving surface 601 of the partial light receiver 600. With an increase in the diameter of the spot of the laser light LB, the diameter of the spot of the partial light LBa increases.

As described above, the conditions (i.e., the position and the diameter) of the spot of the partial light LBa on the light receiving surface 601 of the partial light receiver 600 correspond to the conditions (i.e., the position and the diameter) of the spot of the laser light LB at the end of the optical fiber 20. Accordingly, the conditions (i.e., the position and the diameter) of the spot of the partial light LBa on the light receiving surface 601 of the partial light receiver 600 are detected to detect the conditions (i.e., the position and the diameter) of the spot of the laser light LB at the end of the optical fiber 20. As a result, the beam profile of the laser light LB can be detected.

### [Setting of Targets]

In the laser device 10, a desired beam profile (or a target beam profile) is set when processing a workpiece using laser light LB. The desired beam profile is set in accordance with conditions for projecting the laser light LB. For example, the desired beam profile is set in accordance with the thickness of a workpiece to be cut with the laser light LB.

Once the operation unit 12 sets a desired beam profile, the control unit 14 sets a target spot position and a target spot diameter in accordance with the desired beam profile. The target spot position and the target spot diameter are the target position and the target diameter of the spot of the spot of the laser light LB at the end of the optical fiber 20. The target spot position and the target spot diameter are set to the position and diameter of the laser light LB at the end of the optical fiber 20 in accordance with the desired beam profile.

For example, as shown in (A) of FIG. 3, the target spot position is located at the first core 20a. The laser light LB then has a beam profile suitable for cutting a thin plate (e.g., a plate with a thickness ranging from 1 mm to 3 mm). On the other hand, as shown in (B) of FIG. 3, the target spot position is across the end surfaces of the first and second cores 20a and 20b. The laser light LB then has a beam profile suitable for cutting a medium plate (e.g., a plate with a thickness ranging from 4 mm to 16 mm). As shown in (C) of FIG. 3, the target spot position is located at the second core 20b. The laser light LB then has a beam profile suitable for cutting a thick plate (e.g., a plate with a thickness ranging from 18 mm to 25 mm). The target spot diameter is set smaller than the diameter of the first core 20a, for example.

In this example, the control unit 14 sets a target partial spot position and a target partial spot diameter in accordance with a desired beam profile. The target partial spot position and the target partial spot diameter are the target position and the target diameter of the spot of the partial light LBa on the light receiving surface 601 of the partial light receiver 600. The target partial spot position and the target partial spot diameter are set to the position and diameter according to the desired beam profile.

The control unit 14 controls the optical system 102 so that a beam profile detected by the profile detection unit 103, which detects the conditions (i.e., the position and the diameter) of the spot of the laser light LB at the end of the optical fiber 20, is a desired beam profile, to change the conditions (i.e., the position and the diameter) of the spot of the laser light LB at the end of the optical fiber 20. The detected beam profile includes the position and diameter of the spot of the partial light LBa on the light receiving surface 601 of the partial light receiver 600, according to the beam profile. The desired beam profile includes the target spot position and target spot diameter of the spot of the partial light LBa on the light receiving surface 601 of the partial light receiver 600 corresponding to the target position and the target diameter of the spot of the laser light LB at the end of the optical fiber 20, according to the desired beam profile as shown in (A) to (C) of FIG. 3.

### [Deviation of Optical Path of Optical System]

A deviation of the optical path of the optical system 102 causes a fluctuation in the beam profile of the laser light LB. For example, assume that the optical path of the optical system 102 deviates due to heat, such as the thermal lens effect of an optical component constituting the optical system 102 or the heat distortion of the housing 11a. The spot of the laser light LB at the end of the optical fiber 20 is displaced, which results in a fluctuation in the beam profile of the laser light LB.

### [Control Processing]

The control unit 14 performs control processing in each predetermined control cycle. In the control processing, the control unit 14 controls the optical system 102 so that the beam profile detected by the profile detection unit 103 is a desired beam profile. In this example, the profile detection unit 103 detects the conditions (i.e., the position and the diameter) of the spot of the laser light LB at the end of the optical fiber 20. The control unit 14 controls the optical system 102 so that the position of the spot of the laser light LB detected by the profile detection unit 103 is a predetermined target spot position. For example, the control cycle is in a microsecond order.

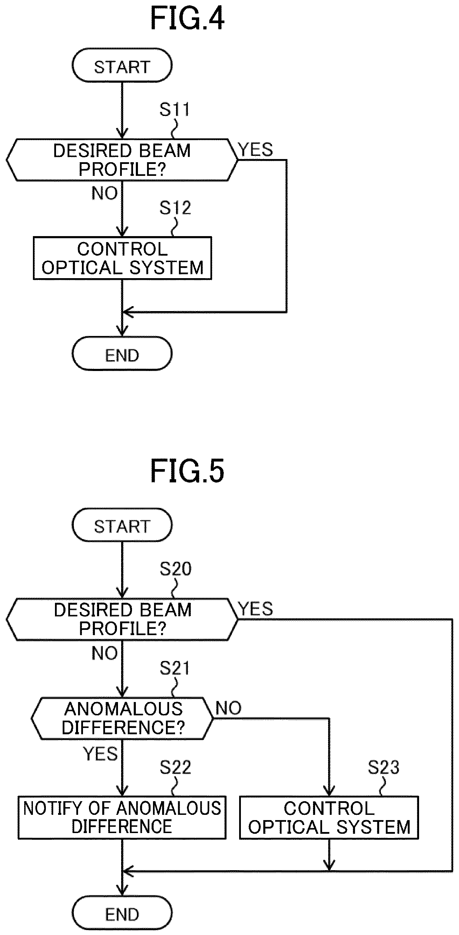

Next, control processing by the control unit 14 according to the first embodiment will be described with reference to FIG. 4. The control unit 14 performs the following processing in each predetermined control cycle.

### <Step S11>

In step S11, the control unit 14 determines whether or not the beam profile (hereinafter referred to as "detected beam profile") detected by the profile detection unit 103 is a desired beam profile. If the detected beam profile is not the desired beam profile, the processing in step S12 is performed. If the detected beam profile is the desired beam profile, the control processing ends.

In this example, the control unit 14 determines that the detected beam profile is the desired beam profile, if the difference between the detected beam profile and the desired beam profile is smaller than a predetermined profile tolerance.

Specifically, the control unit 14 determines that the detected beam profile is the desired beam profile if the difference between the position of the spot of the partial light LBa detected by the profile detection unit 103 and the target partial spot position is smaller than a predetermined position tolerance, and the difference between the spot diameter of the partial light LBa detected by the profile detection unit 103 and the target partial spot diameter is smaller than a predetermined diameter tolerance.

### <Step S12>

If the detected beam profile is determined not to be the desired beam profile in step S11, the control unit 14 controls the optical system 102 in step S12 so that the detected beam profile is the desired beam profile.

In this example, the control unit 14 changes the oscillation angle of the second reflecting mirror 300 in the optical system 102 to change the position of the spot of the laser light LB at the end of the optical fiber 20 in the Y-axis direction. In addition, with a change in the position of the condensing lens 400 in the X-axis direction, the position of the spot of the laser light LB at the end of the optical fiber 20 changes in the X-axis direction. With a change in the position of the condensing lens 400 in the Y-axis direction, the position of the spot of the laser light LB at the end of the optical fiber 20 changes in the Y-axis direction. With a change in the position of the condensing lens 400 in the Z-axis direction, the diameter of the spot of the laser light LB at the end of the optical fiber 20 changes.

The change in the position of the spot of the laser light LB at the end of the optical fiber 20 may be adjusted as follows. First, the position of the condensing lens 400 is adjusted so that the laser light LB has a smaller spot diameter than the first core 20a of the optical fiber 20 and that the center of the optical axis of the spot diameter of the laser light LB comes to the center of the diameter of the first core 20a. Next, the oscillation angle of the second reflecting mirror 300 is changed to change the position from the first core 20a to the second core 20b of the optical fiber 20. The oscillation angle of the second reflecting mirror 300 is changed in a single axis direction so that the mirror driving mechanism 350, which drives the second reflecting mirror 300, has a simple and compact configuration.

Alternatively, the position of the condensing lens 400 may be finely adjusted after changing the oscillation angle of the second reflecting mirror 300. Accordingly, fine position adjustment can be made easily.

The oscillation angle of the second reflecting mirror 300 is changed to change the position of the spot of the laser light LB at the end of the optical fiber 20 in the Y-axis direction as the single axis. Alternatively, the oscillation angle of the second reflecting mirror 300 is changed in the biaxial directions to change the position of the spot of the laser light LB at the end of the optical fiber 20 in the X- and Y-axis directions. Alternatively, the position of the spot of the laser light LB at the end of the optical fiber 20 may be changed by changing the oscillation angle of the second reflecting mirror 300 without adjusting the position of the condensing lens 400.

The control unit 14 controls the oscillation angle of the second reflecting mirror 300 and/or the position of the condensing lens 400 so that the conditions (i.e., the position and the diameter) of the spot of the partial light LBa on the light receiving surface 601 of the partial light receiver 600 are predetermined target conditions (i.e., a target partial spot position and a target partial spot diameter).

Specifically, the control unit 14 controls the oscillation angle of the second reflecting mirror 300 and/or the position of the condensing lens 400 in the optical system 102 so that the difference between the position of the spot of the partial light LBa and the target partial spot position is closer to zero or falls within a predetermined tolerance. The control unit 14 also controls the position of the collection lens 400 in the Z-axis direction so that the difference between the spot diameter of the partial light LBa and the target partial spot diameter is closer to zero or falls within a predetermined tolerance.

The conditions of the spot of the partial light LBa on the light receiving surface 601 of the partial light receiver 600 are closer to the target conditions to bring the conditions (i.e., the position and the diameter) of the spot of the laser light LB at the end of the optical fiber 20 closer to the target conditions (i.e., a target spot position and a target spot diameter). As a result, the laser light LB has a beam profile that resembles the desired beam profile.

### [Advantages of First Embodiment]

As described above, the control unit 14 controls the optical system 102 in each predetermined control cycle so that the beam profile detected by the profile detection unit 103 is a desired beam profile. Accordingly, the beam profile of the laser light less fluctuates due to a deviation of the optical path of the optical system 102.

### (Second Embodiment)

A laser device 10 according to a second embodiment differs from the laser device 10 according to the first embodiment in the operation of the control unit 14. The other configurations of the laser device 10 according to the second embodiment are the same or similar to those of the laser device 10 according to the first embodiment.

In the second embodiment, the control unit 14 notifies of an anomalous difference in the control processing. In the notification of the anomalous difference, the control unit 14 outputs anomalous difference information for notifying the anomalous difference, if the difference between the position (hereinafter referred to as "detected spot position") of the spot of the laser light LB at the end of the optical fiber 20 detected by the profile detection unit 103 and the target spot position is larger than a predetermined tolerance. For example, the tolerance is set smaller than an anomalous difference between the detected spot position and the target spot position which is believed to be anomalous.

### [Control Processing]

Next, control processing by the control unit 14 according to the second embodiment will be described with reference to FIG. 5. The control unit 14 performs the following processing in each predetermined control cycle.

### <Step S20>

In step S20, the control unit 14 determines whether or not the detected beam profile (i.e., the beam profile detected by the profile detection unit 103) is a desired beam profile. If the detected beam profile is not the desired beam profile, the processing in step S21 is performed. If the detected beam profile is the desired beam profile, the control processing ends.

### <Step S21>

Assume that the detected beam profile is determined not to be the desired beam profile in step S20. In this case, in step S21, the control unit 14 determines whether or not the difference between the detected spot position (i.e., the position of the spot of the laser light LB at the end of the optical fiber 20 detected by the profile detection unit 103) and the target spot position is an anomalous difference larger than a tolerance. If the difference between the detected spot position and the target spot position is an anomalous difference larger than the tolerance, the processing in step S22 is performed. If not, the processing in step S23 is performed.

### <Step S22>

Assume that the difference between the detected spot position and the target spot position is determined to be an anomalous difference larger than the tolerance in step S21. In this case, in step S22, the control unit 14 outputs anomalous difference information for notifying of the fact that the difference between the detected spot position and the target spot position is anomalous. For example, the control unit 14 outputs the anomalous difference information to the display unit 13. Accordingly, the display unit 13 displays the anomalous difference information and notifies of the fact that the difference between the detected spot position and the target spot position is anomalous.

### <Step S23>

On the other hand, assume that the difference between the detected spot position and the target spot position is determined not to be an anomalous difference larger than the tolerance in step S21. In this case, the control unit 14 controls the optical system 102 in step S23 so that the detected beam profile is a desired beam profile.

### [Advantages of Second Embodiment]

The second embodiment provides the same or similar advantages as in the first embodiment.

In the second embodiment, if the difference between the position of the spot of the laser light LB and the target spot position is anomalous, anomalous difference information is output to notify the fact.

### (First Variation of Second Embodiment)

A laser device 10 according to a first variation of the second embodiment differs from the laser device 10 according to the second embodiment in the operation of the control unit 14. The other configurations of the laser device 10 according to the first variation of the second embodiment are the same or similar to those of the laser device 10 according to the second embodiment.

In the first variation of the second embodiment, the control unit 14 notifies of uncontrollability in the control processing. In the notification of the uncontrollability, the control unit 14 outputs uncontrollability information for notifying of the uncontrollability, if the beam profile detected by the profile detection unit 103 is unable to be a desired beam profile even by controlling the optical system 102. For example, assume that the position of the spot of the laser light LB at the end of the optical fiber 20 is shifted from the first core 20a to the second core 20b of the optical fiber 20. Further assume that the beam profile detected by the profile detection unit 103 cannot be a desired beam profile even by controlling the optical system 102 and the position cannot be shifted, because the difference between the position of the spot of the laser light LB and the target spot position falls out of the range of the anomalous difference. This is an uncontrollable state, for example, where a control defect occurs in an optical component constituting the optical system 102.

### [Control Processing]

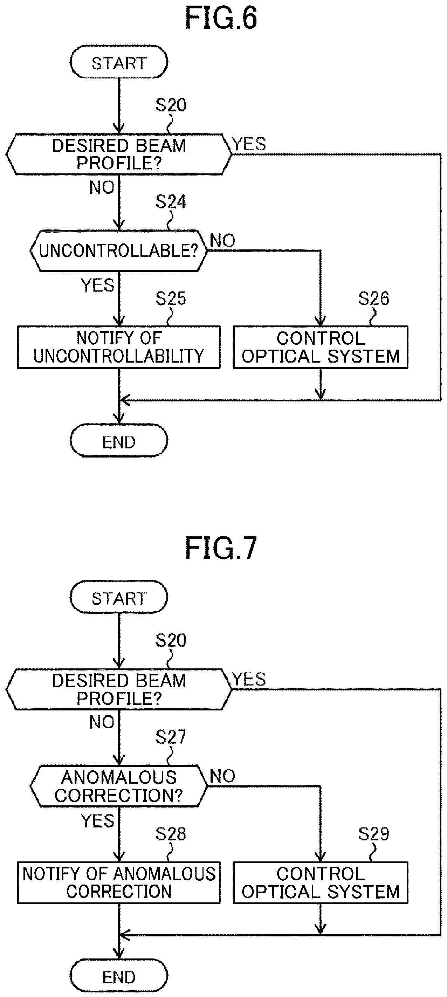

Next, control processing by the control unit 14 according to the first variation of the second embodiment will be described with reference to FIG. 6. In the control processing in the first variation of the second embodiment, steps S21 to S23 in the control processing in the second embodiment are replaced with the following steps S24 to S26.

### <Step S24>

Assume that the detected beam profile (i.e., the beam profile detected by the profile detection unit 103) is determined not to be the desired beam profile in step S20. In this case, in step S24, the control unit 14 determines whether or not the optical system 102 is uncontrollable so that the detected beam profile is the desired beam profile. If the optical system 102 is uncontrollable so that the detected beam profile is the desired beam profile, the processing in step S25 is performed. If not, the processing in step S26 is performed.

### <Step S25>

Assume that the optical system 102 is determined to be uncontrollable in step S24 so that the detected beam profile is the desired beam profile. In this case, in step S25, the control unit 14 outputs uncontrollability information for notifying of the fact that the optical system 102 is uncontrollable so that the detected beam profile is the desired beam profile. For example, the control unit 14 outputs the uncontrollability information to the display unit 13. Accordingly, the display unit 13 displays the uncontrollability information and notifies of the fact that the optical system 102 is uncontrollable so that the detected beam profile is the desired beam profile.

### <Step S26>

On the other hand, assume that the optical system 102 is determined to be controllable in step S24 so that the detected beam profile is the desired beam profile. In this case, in step S26, the control unit 14 controls the optical system 102 so that the detected beam profile is the desired beam profile.

### [Advantages of First Variation of Second Embodiment]

The first variation of the second embodiment provides the same or similar advantages as in the first embodiment.

In the first variation of the second embodiment, if the beam profile is unable to be a desired beam profile even by controlling the optical system 102, uncontrollability information is output to notify of the fact.

### (Second Variation of Second Embodiment)

A laser device 10 according to a second variation of the second embodiment differs from the laser device 10 according to the second embodiment in the operation of the control unit 14. The other configurations of the laser device 10 according to the second variation of the second embodiment are the same or similar to those of the laser device 10 according to the second embodiment.

In the second variation of the second embodiment, the control unit 14 notifies of anomalous correction in the control processing. In the notification of the anomalous correction, the control unit 14 outputs anomalous correction information for notifying the anomalous correction, if the beam profile detected by the profile detection unit 103 is not the desired beam profile, and the control unit 14 has corrected the optical system 102 at times more than a predetermined threshold. For example, the threshold is set smaller than the times (anomalous times) of corrections where the optical system 102 is not normally correctable by the control unit 14.

### [Control Processing]

Next, control processing by the control unit 14 according to the second variation of the second embodiment will be described with reference to FIG. 7. In the control processing in the second variation of the second embodiment, steps S21 to S23 in the control processing in the second embodiment are replaced with the following steps S27 to S29. The control unit 14 counts the times of corrections. For example, the times of corrections are stored in a memory (not shown).

### <Step S27>

Assume that the detected beam profile (i.e., the beam profile detected by the profile detection unit 103) is determined not to be the desired beam profile in step S20. In this case, in step S27, the control unit 14 determines whether or not the control unit 14 has corrected the optical system 102 at times more than a threshold. If the control unit 14 has corrected the optical system 102 at times more than the threshold, the processing in step S28 is performed. If not, the processing in step S29 is performed.

### <Step S28>

Assume that the control unit 14 is determined in step S27 to have corrected the optical system 102 at times more than the threshold. In this case, in step S28, the control unit 14 outputs anomalous correction information for notifying the fact that the optical system 102 is not normally correctable by the control unit 14. For example, the control unit 14 outputs the anomalous correction information to the display unit 13. Accordingly, the display unit 13 displays the anomalous correction information and notifies the fact that the optical system 102 is not normally correctable by the control unit 14.

### <Step S29>

On the other hand, assume that the control unit 14 is determined in step S27 to have corrected the optical system 102 at times not more than the threshold. In this case, in step S29, the control unit 14 controls the optical system 102 so that the detected beam profile is the desired beam profile. The control unit 14 then adds one to correction times.

Upon determination in step S20 that the detected beam profile is the desired beam profile, the control unit 14 resets the correction times to zero.

### [Advantages of Second Variation of Second Embodiment]

The second variation of the second embodiment provides the same or similar advantages as in the first embodiment.

In the second variation of the second embodiment, if the optical system 102 is anomalously corrected by the control unit 14, anomalous correction information is output to notify the fact.

### (Third Embodiment)

Assume that the target spot position is set at the boundary between the first and second cores 20a and 20b of the optical fiber 20, in other words, the spot diameter at the target spot position extends across the boundary between the first and second cores 20a and 20b of the optical fiber 20. In this case, the position of the spot of the laser light LB changes at the boundary between the first and second cores 20a and 20b of the optical fiber 20. Accordingly, at the boundary between the first and second cores 20a and 20b of the optical fiber 20, the ratio between the parts of the spot diameter of the target spot position at the first and second cores 20a and 20b of the optical fiber 20 varies. The beam profile of the laser light LB significantly (or sensitively) fluctuates in accordance with the variation in the position of the spot of the laser light LB. In this case, the control cycle (i.e., the cycle of executing the control processing) is desired to be short to increase the frequency of executing the control processing (i.e., processing for causing the beam profile of the laser light LB to resemble a desired beam profile) by the control unit 14.

On the other hand, assume that the target spot position is set at the first core 20a (or the second core 20b) of the optical fiber 20, in other words, the spot diameter at the target spot position is within the first core 20a (or the second core 20b) of the optical fiber 20. In this case, the position of the spot of the laser light LB changes within the first core 20a (or the second core 20b) of the optical fiber 20. Accordingly, the beam profile of the laser light LB gently (or insensitively) fluctuates in accordance with the variation in the position of the spot of the laser light LB. In this case, the control cycle is desired to be long to decrease the frequency of executing the control processing by the control unit 14.

### [Laser Device]

A laser device 10 according to a third embodiment differs from the laser device 10 according to the first embodiment in the operation of the control unit 14. The other configurations of the laser device 10 according to the third embodiment are the same or similar to those of the laser device 10 according to the first embodiment.

In the third embodiment, the control unit 14 performs adjustment processing of performing determination processing in each predetermined (or sampling) adjustment cycle. For example, in the adjustment processing, the control unit 14 changes the control cycle in accordance with the target spot position.

In the third embodiment, the control unit 14 performs the control processing in each control cycle adjusted (or changed) by the adjustment processing. The control processing in the third embodiment is the same or similar to that in the first embodiment.

### [Adjustment Processing]

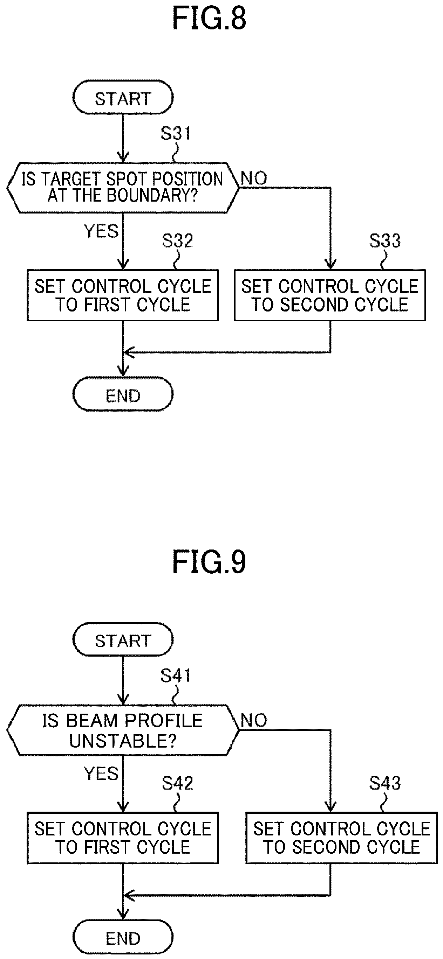

Next, adjustment processing by the control unit 14 according to the third embodiment will be described with reference to FIG. 8. The control unit 14 performs the following processing in each predetermined adjustment (or sampling) cycle.

### <Step S31>

In step S31, the control unit 14 determines whether or not the target spot position is set at the boundary (at the boundary across the first and second cores 20a and 20b of the optical fiber 20, i.e., in which the spot diameter at the target spot position extends across the boundary between the first and second cores 20a and 20b of the optical fiber 20). If the target spot position is determined to be set at the boundary, the processing in step S32 is performed. If not, the processing in step S33 is performed.

### <Step S32>

Assume that, in step S31, the target spot position is determined to be set at the boundary, in other words, the spot diameter at the target spot position is determined to extend across the boundary between the first and second cores 20a and 20b of the optical fiber 20. In this case, in step S32, the control unit 14 sets the control cycle to a first cycle.

### <Step S33>

On the other hand, assume that the target spot position is determined not to be set at the boundary, in other words, the spot diameter at the target spot position is within the first core 20a (or the second core 20b) of the optical fiber 20 in step S31. In this case, in step S33, the control unit 14 sets the control cycle to a second cycle which is longer than the first cycle.

### [Advantages of Third Embodiment]

The third embodiment provides the same or similar advantages as in the first embodiment.

In the third embodiment, the control cycle is changed in accordance with the target spot position, that is, the control cycle is suitably set to a cycle according to the target spot position.

In the third embodiment, the target spot position is referred to, which is the target position and the target diameter of the spot of the laser light LB at the end of the optical fiber 20. Instead, a detected spot position may be referred to, which is the position of the spot of the laser light LB detected by the profile detection unit 103. In step S31, whether or not the target spot position is located at the boundary (at the boundary across the first and second cores 20a and 20b of the optical fiber 20) is determined. Instead, whether or not the detected spot position is located at the boundary (at the boundary across the first and second cores 20a and 20b of the optical fiber 20) may be determined. Accordingly, the control cycle is changed in accordance with the detected spot position, that is, the control cycle is suitably set to a cycle according to the detected spot position.

### (Fourth Embodiment)

Assume that the beam profile of the laser light LB is unstable. In this case, the control cycle (i.e., the cycle of executing the control processing) is desired to be short to increase the frequency of executing the control processing (i.e., processing for causing the beam profile of the laser light LB to resemble a desired beam profile) by the control unit 14.

On the other hand, assume that the beam profile of the laser light LB is stable. In this case, the control cycle is desired to be long to decrease the frequency of executing the control processing by the control unit 14.

### [Laser Device]

A laser device 10 according to a fourth embodiment differs from the laser device 10 according to the first embodiment in the operation of the control unit 14. The other configurations of the laser device 10 according to the fourth embodiment are the same or similar to those of the laser device 10 according to the first embodiment.

In the fourth embodiment, the control unit 14 performs adjustment processing of performing determination processing in each predetermined adjustment (or sampling) cycle. In the adjustment processing, the control unit 14 changes the control cycle in accordance with the stability of the beam profile detected by the profile detection unit 103. For example, the control unit 14 determines that the beam profile is stable if fluctuation in the beam profile detected by the profile detection unit 103 falls within a predetermined tolerance range for a time longer than a predetermined time of stability. The fluctuation is, specifically, the variation in the position of the spot of the laser light LB at the end of the optical fiber 20, in other words, the variation in the difference between the detected spot position and the target spot position of the laser light LB in each control cycle or at the time of shifting the position of the spot of the laser light LB at the end of the optical fiber 20. The tolerance range is set to a range in which the beam profile is believed to fluctuate stably. The time of stability is set to a time at which the beam profile is believed to fluctuate stably.

In the fourth embodiment, the control unit 14 performs the control processing in each control cycle adjusted (or changed) by the adjustment processing. The control processing in the fourth embodiment is the same or similar to that in the first embodiment.

### [Adjustment Processing]

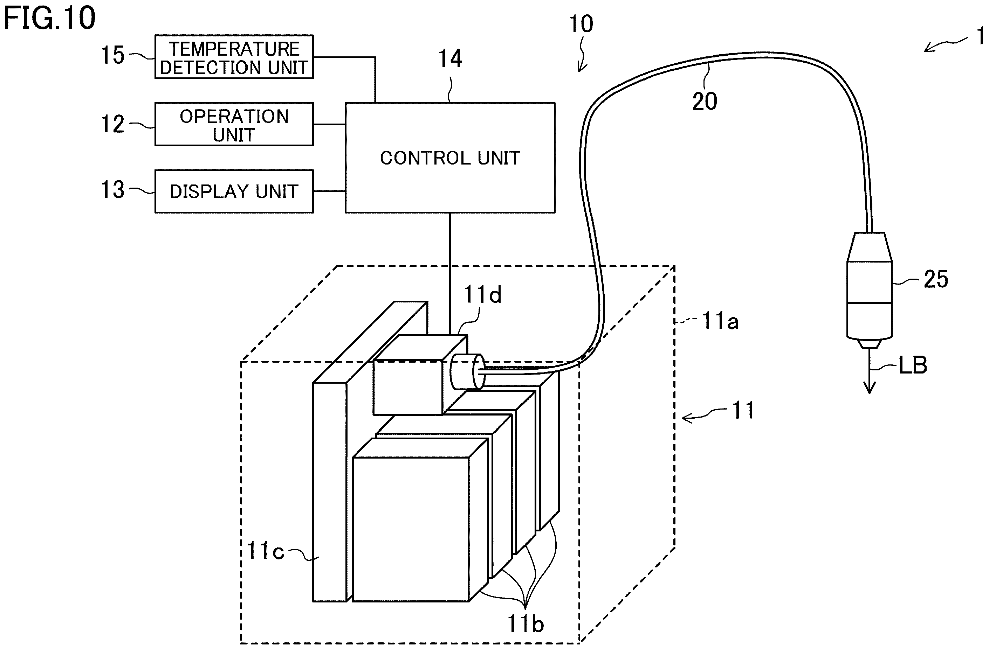

Next, adjustment processing by the control unit 14 according to the fourth embodiment will be described specifically with reference to FIG. 10. The control unit 14 performs the following processing in each predetermined adjustment (or sampling) cycle.

### <Step S41>

In step S41, the control unit 14 determines whether or not the beam profile detected by the profile detection unit 103 is unstable, that is, the beam profile fluctuates unstably. If the beam profile is unstable, the processing in step S42 is performed. If not, the processing in step S43 is performed.

### <Step S42>

If the beam profile is determined to be unstable in step S42, the control unit 14 sets the control cycle to a first cycle.

### <Step S43>

On the other hand, assume that the beam profile is determined not to be unstable, that is, stable in step S41. In this case, in step S43, the control unit 14 sets the control cycle to a second cycle longer than the first cycle.

### [Advantages of Fourth Embodiment]

The fourth embodiment provides the same or similar advantages as in the first embodiment.

In the fourth embodiment, the control cycle is changed in accordance with the stability of the beam profile, that is, the control cycle is suitably set to a cycle according to the stability of the beam profile.

### (Fifth Embodiment)

Once the ambient temperature of the optical system 102 changes, the deviation of the optical path of the optical system 102 changes to change the position of the spot of the laser light LB at the end of the optical fiber 20, which results in a fluctuation in the beam profile of the laser light LB. At the start of driving the laser oscillator 11 (e.g., the laser modules 11b and the laser source 101), specifically, at the initial start of the day or at the restart after a stop for several minutes to several hours, the ambient temperature of the optical system 102 is gradually increased with time by the driving heat of the laser oscillator 11. After that, the ambient temperature of the optical system 102 becomes steady (i.e., thermally stable).

If the ambient temperature of the optical system 102 as the temperature related to the optical system 102 is lower than the temperature in the steady state and is thermally unstable at the rising of the temperature, the beam profile of the laser light LB is unstable. In this case, the control cycle (i.e., the cycle of executing the control processing) is desired to be short to increase the frequency of executing the control processing (i.e., processing for causing the beam profile of the laser light LB to resemble a desired beam profile) by the control unit 14.

On the other hand, if the ambient temperature of the optical system 102 reaches a temperature in a steady state, the beam profile of the laser light LB is stable. In this case, the control cycle is desired to be long to decrease the frequency of executing the control processing by the control unit 14.

### [Laser Device]

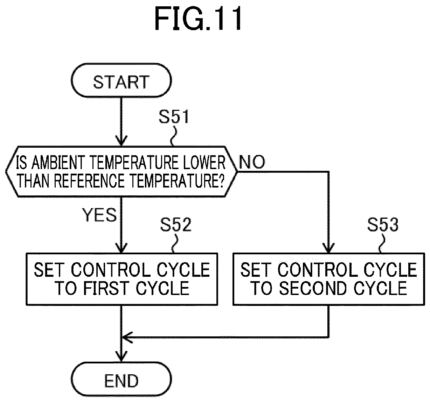

FIG. 11 illustrates a configuration of a laser device 10 according to a fifth embodiment. The laser device 10 according to the fifth embodiment includes a temperature detection unit 15 in addition to the configuration of the laser device 10 according to the first embodiment shown in FIG. 2. The laser device 10 according to the fifth embodiment differs from the laser device 10 according to the first embodiment in the operation of the control unit 14. The other configurations of the laser device 10 according to the fifth embodiment are the same or similar to those of the laser device 10 according to the first embodiment.

The temperature detection unit 15 detects the ambient temperature of the optical system 102 as a temperature related to the optical system 102. Examples of the ambient temperature of the optical system 102 include the temperature of the laser modules 11b, the temperature of the coupling unit 11c, the temperature in the housing 11a, and the temperature around the laser oscillator 11.

In the fifth embodiment, the control unit 14 performs adjustment processing of performing determination processing in each predetermined adjustment (or sampling) cycle. In the adjustment processing, the control unit 14 changes the control cycle in accordance with the ambient temperature detected by the temperature detection unit 15.

In the fifth embodiment, the control unit 14 performs the control processing in each control cycle adjusted (or changed) by the adjustment processing. The control processing in the fifth embodiment is the same or similar to that in the first embodiment.

### [Adjustment Processing]

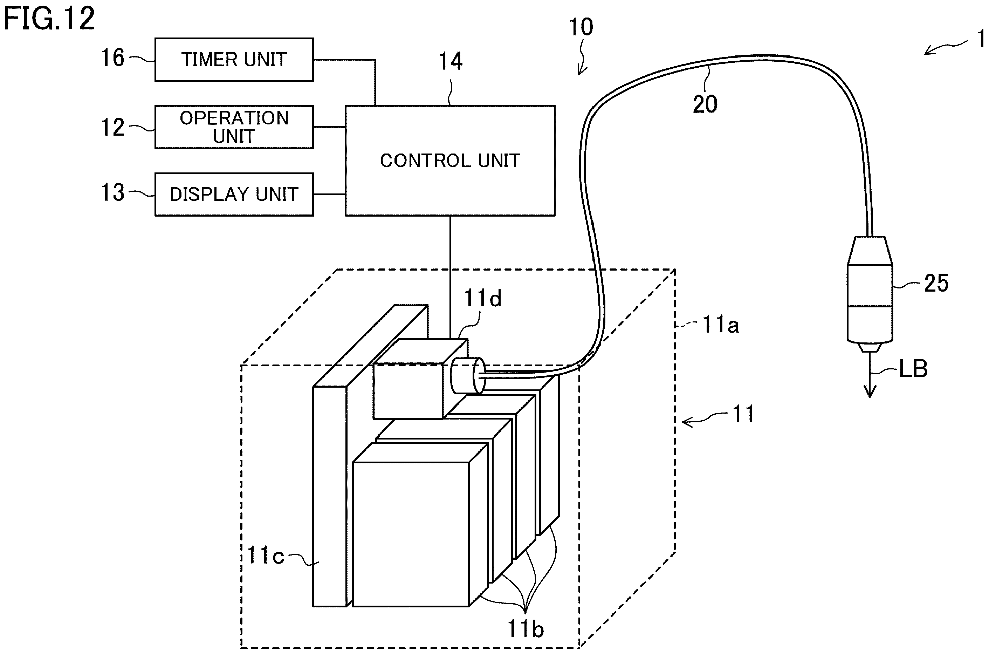

Next, adjustment processing by the control unit 14 according to the fifth embodiment will be described with reference to FIG. 12. The control unit 14 performs the following processing in each predetermined adjustment (or sampling) cycle.

### <Step S51>

In step S51, the control unit 14 determines whether or not the ambient temperature detected by the temperature detection unit 15 is lower than a reference temperature. If the ambient temperature of the optical system 102 is lower than the reference temperature, the processing in step S52 is performed. If not, the processing in step S53 is performed. For example, the reference temperature is set to the ambient temperature of the optical system 102 in a steady state. Specifically, the reference temperature may be set to any temperature within a range around the ambient temperature of the optical system 102 in a steady state. Here, setting "to any temperature" includes that setting the reference temperature to be the average or the lower limit of ambient temperatures of the optical system 102 in a steady state.

### <Step S52>

If the ambient temperature of the optical system 102 is determined to be lower than the reference temperature in step S51, the control unit 14 sets the control cycle to a first cycle in step S52.

### <Step S53>

On the other hand, assume that the ambient temperature of the optical system 102 is determined to be higher than or equal to the reference temperature in step S51. In this case, in step S53, the control unit 14 sets the control cycle to a second cycle which is longer than the first cycle.

### [Effects of Fifth Embodiment]

The fifth embodiment provides the same or similar advantages as in the first embodiment.

In the fifth embodiment, the control cycle is changed in accordance with the ambient temperature of the optical system 102 as a temperature related to the optical system 102, that is, the control cycle is suitably set to a cycle according to the ambient temperature of the optical system 102.

### (Sixth Embodiment)

At the start of driving the laser oscillator 11 (specifically, the laser modules 11b and the laser source 101), specifically, at the initial start of the day or at the restart after a stop for several minutes to several hours, the ambient temperature of the optical system 102 as a temperature related to the optical system 102 is gradually increased with time by the driving heat of the laser oscillator 11. After that, the ambient temperature of the optical system 102 becomes steady (i.e., thermally stable).

From the start of driving the laser oscillator 11 until the ambient temperature of the optical system 102 reaches the steady temperature, the beam profile of the laser light LB is unstable. In this case, the control cycle (i.e., the cycle of executing the control processing) is desired to be short to increase the frequency of executing the control processing (i.e., processing for causing the beam profile of the laser light LB to resemble a desired beam profile) by the control unit 14.

On the other hand, after the ambient temperature of the optical system 102 has become steady, the beam profile of the laser light LB is stable. In this case, the control cycle is desired to be long to decrease the frequency of executing the control processing by the control unit 14.

The time from the start of driving the laser oscillator 11 until the ambient temperature of the optical system 102 becomes steady may be obtained in advance by a trial operation, for example.

### [Laser Device]

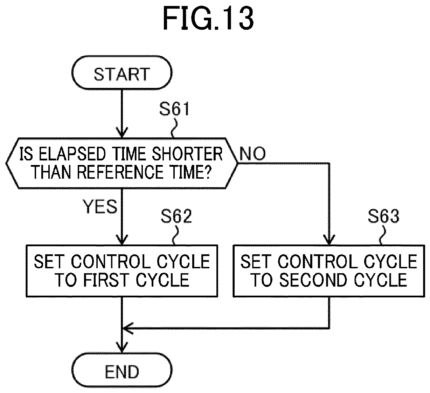

FIG. 13 illustrates a configuration of a laser device 10 according to a sixth embodiment. The laser device 10 according to the sixth embodiment includes a timer unit 16 in addition to the configuration of the laser device 10 according to the first embodiment shown in FIG. 2. The laser device 10 according to the sixth embodiment differs from the laser device 10 according to the first embodiment in the operation of the control unit 14. The other configurations of the laser device 10 according to the sixth embodiment are the same or similar to those of the laser device 10 according to the first embodiment.

The timer unit 16 measures an elapsed time from the start of driving the laser source 101.

In the sixth embodiment, the control unit 14 performs adjustment processing of performing determination processing in each predetermined adjustment (or sampling) cycle. In the adjustment processing, the control unit 14 changes the control cycle in accordance with the elapsed time measured by the timer unit 16.

In the sixth embodiment, the control unit 14 performs the control processing in each control cycle adjusted (or changed) by the adjustment processing. The control processing in the sixth embodiment is the same or similar to that in the first embodiment.

### [Adjustment Processing]

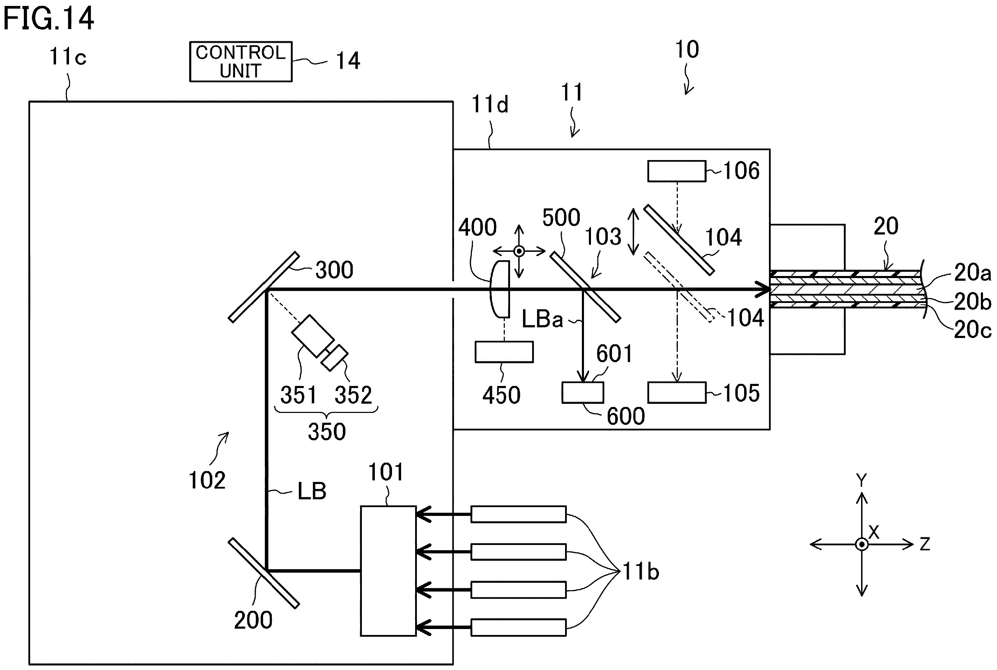

Next, adjustment processing by the control unit 14 according to the sixth embodiment will be described with reference to FIG. 14. The control unit 14 performs the following processing in each predetermined adjustment (or sampling) cycle.

### <Step S61>

In step S61, the control unit 14 determines whether or not the elapsed time detected by the timer unit 16 is shorter than a reference time. If the elapsed time from the start of driving the laser source 101 is shorter than the reference time, the processing in step S62 is performed. If not, the processing in step S63 is performed. For example, the reference time is set to a time from the start of driving the laser source 101 until the ambient temperature of the optical system 102 becomes steady.

### <Step S62>

If the elapsed time from the start of driving the laser source 101 is determined to be shorter than the reference time in step S61, the control unit 14 sets the control cycle to a first cycle in step S62.

### <Step S63>

On the other hand, assume that the elapsed time from the start of driving the laser source 101 is determined not to be shorter than the reference time in step S61, in other words, the elapsed time from the start of driving the laser source 101 is longer than or equal to the reference time. In this case, in step S63, the control unit 14 sets the control cycle to a second cycle longer than the first cycle.

### [Advantages of Sixth Embodiment]

The sixth embodiment provides the same or similar advantages as in the first embodiment.

In the sixth embodiment, the control cycle is changed in accordance with the elapsed time from the start of driving the laser source 101, that is, the control cycle is suitably set to a cycle according to the elapsed time from the start of driving the laser source 101.

### (Other Embodiments)

While an example where the mirror driving mechanism 350 includes the piezo stage and the piezo actuator has been described above, the configuration is not limited thereto. For example, as shown in FIG. 14, the mirror driving mechanism 350 may include an oscillation motor 351 and an encoder 352. The oscillation motor 351 has a rotation shaft to which the second reflecting mirror 300 is fixed. The oscillation motor 351 has a rotation axis serving as the oscillation axis of the second reflecting mirror 300. With this configuration, once the oscillation motor 351 is driven, the oscillation angle of the second reflecting mirror 300 changes in accordance with the rotation angle of the oscillation motor 351. As a result, the angle at which the reflection surface is inclined from the optical path of the laser light LB incident on the second reflecting mirror 300 changes. The encoder 352 detects the rotation angle of the oscillation motor 351. The outputs of the encoder 352 are transmitted to the control unit 14.

While the end of the optical fiber 20 is raised above as an example of the object to be irradiated, the object is not limited thereto.

While the adjustment processing of performing the determination processing is performed in each adjustment (or sampling) cycle to select the first or second cycle in the above description, the cycle is not limited thereto. The control cycle set to the first or second cycle may be considered as the sampling cycle. In each sampling cycle of this control cycle, adjustment processing of performing the determination processing may be performed to select the first or second cycle.

The embodiments described above may be combined as appropriate. The embodiments described above are mere preferred examples in nature, and not intended to limit the scope of the application, as defined by the appended claims.

### INDUSTRIAL APPLICABILITY

As described above, the technique disclosed herein is useful as a laser device.

### DESCRIPTION OF REFERENCE CHARACTERS

- 1: Laser Processing System
- 10: Laser Device
- 11: Laser Oscillator
- 12: Operation Unit
- 13: Display Unit
- 14: Control Unit
- 15: Temperature Detection Unit
- 16: Timer Unit
- 20: Optical Fiber
- 20a: First Core
- 20b: Second Core
- 25: Output Head
- 101: Laser Source
- 102: Optical System
- 103: Profile Detection Unit
- LB: Laser Light

## Claims

1. A laser device for irradiating an object (20) to be irradiated, with laser light (LB), the laser device comprising:
a laser source (101) configured to emit the laser light (LB);
an optical system (102) configured to irradiate the object (20) with the laser light (LB) emitted from the laser source (101), and capable of changing a beam profile of the laser light (LB) projected on the object (20);
a profile detection unit (103) configured to detect the beam profile of the laser light (LB) emitted from the optical system (102) to the object (20); and
a control unit (14) configured to perform control processing for controlling the optical system so that the beam profile detected by the profile detection unit is a desired beam profile in each predetermined control cycle, a control cycle being a cycle of executing the control processing, wherein,
the object (20) is an optical fiber (20) including a first core (20a) and a second core (20b) surrounding the first core (20a),
the laser light (LB) emitted from the optical system (102) is configured to be projected onto the end of the optical fiber (20),
the beam profile detected by the profile detection unit (103) includes a position of a spot of the laser light (LB) at the end of the optical fiber (20),
the control unit (14) is configured to control the optical system (102) so that the position of the spot detected by the profile detection unit (103) is a target spot position according to the desired beam profile,
the profile detection unit (103) includes
a partial reflection mirror (500) configured to reflect a part of the laser light (LB) traveling from the optical system (102) toward the end of the optical fiber (20), and
a partial light receiver (600) configured to receive the part of the laser light (LB) reflected by the partial reflection mirror (500) and configured to then output an electrical signal corresponding to the conditions of receiving the partial light (LBa) and to transmit the output to the control unit (14), and **characterized in that**:
the control unit (14) is configured to set the control cycle to:
a first cycle, if the target spot position is set at a boundary between the first core (20a) and the second core (20b) of the optical fiber (20), the first cycle being short with respect to a second cycle to increase the frequency of executing the control processing by the control unit (14); and
the second cycle longer than the first cycle, if the target spot position is not set at the boundary to decrease the frequency of executing the control processing by the control unit (14).

2. The laser device of claim 1, wherein
if the position of the spot of the laser light (LB) at the end of the optical fiber (20) detected by the profile detection unit (103) is away from the target spot position with a difference larger than a predetermined tolerance, the control unit (14) outputs anomalous difference information for notifying of anomaly of the difference.

3. The laser device of claim 1 or 2, wherein
if the beam profile detected by the profile detection unit (103) is unable to be the desired beam profile even by controlling the optical system (102), the control unit (14) outputs uncontrollability information for notifying uncontrollability.

4. The laser device of claim 1, wherein
the control unit (14) changes the control cycle in accordance with stability of the beam profile detected by the profile detection unit (103).

5. The laser device of claim 1, further comprising:
a temperature detection unit configured to detect an ambient temperature of the optical system (102), wherein
the control unit (14) changes the control cycle in accordance with the ambient temperature detected by the temperature detection unit.

6. The laser device of claim 1, further comprising:
a timer unit configured to measure an elapsed time after a start of driving the laser source (101), wherein
the control unit (14) changes the control cycle in accordance with the elapsed time detected by the timer unit.

7. The laser device of any one of claims 1 to 6, wherein
if the beam profile detected by the profile detection unit (103) is not the desired beam profile, and the control unit (14) has corrected the optical system (102) at times more than a threshold, the control unit (14) outputs anomalous correction information for notifying of anomalous correction.

8. A method of controlling a laser device including: a laser source (101) configured to emit laser light (LB); and an optical system (102) configured to irradiate an end of an optical fiber (20) including a first core (20a) and a second core (20b) surrounding the first core (20a), with the laser light (LB) emitted from the laser source (101), and capable of changing a beam profile of the laser light (LB) projected onto the end of the optical fiber (20), the method comprising:
detecting a position of a spot of the laser light (LB) at the end of the optical fiber (20);
controlling the optical system (102) in each predetermined control cycle so that the position of the spot detected in the detecting is a target spot position according to a desired beam profile, a control cycle being a cycle of executing the control processing, and
adjusting the control cycle to:
a first cycle, if the target spot position is set at a boundary between the first core (20a) and the second core (20b) of the optical fiber (20), the first cycle being short with respect to a second cycle to increase the frequency of executing the control processing by the control unit (14); and
the second cycle longer than the first cycle, if the target spot position is not set at the boundary to decrease the frequency of executing the control processing by the control unit (14).

## Patentansprüche

1. Laservorrichtung zum Bestrahlen eines zu bestrahlenden Objekts (20) mit Laserlicht (LB), wobei die Laservorrichtung Folgendes umfasst:
eine Laserquelle (101), die dazu ausgestaltet ist, das Laserlicht (LB) zu emittieren;
ein optisches System (102), das dazu ausgestaltet ist, das Objekt (20) mit dem Laserlicht (LB), das von der Laserquelle (101) emittiert wird, zu bestrahlen, und in der Lage ist, ein Strahlenprofil des Laserlichts (LB), das auf das Objekt (20) projiziert wird, zu ändern;
eine Profildetektionseinheit (103), die dazu ausgestaltet ist, das Strahlenprofil des Laserlichts (LB), das von dem optischen System (102) zu dem Objekt (20) emittiert wird, zu detektieren; und
eine Steuereinheit (14), die dazu ausgestaltet ist, Steuerverarbeitung zum Steuern des optischen Systems derart durchzuführen, dass das von der Profildetektionseinheit detektierte Strahlenprofil ein gewünschtes Strahlenprofil in jedem vorbestimmten Steuerzyklus ist, wobei ein Steuerzyklus ein Zyklus des Ausführens der Steuerverarbeitung ist, wobei
das Objekt (20) eine optische Faser (20) ist, die einen ersten Kern (20a) und einen zweiten Kern (20b) umfasst, der den ersten Kern (20a) umgibt,
das von dem optischen System (102) emittierte Laserlicht (LB) dazu ausgestaltet ist, auf das Ende der optischen Faser (20) projiziert zu werden,
das von der Profildetektionseinheit (103) detektierte Strahlenprofil eine Position eines Punktes des Laserlichts (LB) am Ende der optischen Faser (20) umfasst,
die Steuereinheit (14) dazu ausgestaltet ist, das optische System (102) derart zu steuern, dass die Position des Punkts, die von der Profildetektionseinheit (103) detektiert wird, eine Zielpunktposition gemäß dem gewünschten Strahlenprofil ist,
die Profildetektionseinheit (103) Folgendes umfasst:
einen Teilreflexionsspiegel (500), der dazu ausgestaltet ist, einen Teil des Laserlichts (LB), der sich von dem optischen System (102) zum Ende der optischen Faser (20) hin bewegt, zu reflektieren, und
einen Teillichtempfänger (600), der dazu ausgestaltet ist, den Teil des Laserlichts (LB), der von dem Teilreflexionsspiegel (500) reflektiert wird, zu empfangen, und dazu ausgestaltet ist, dann ein elektrisches Signal, das den Bedingungen des Empfangens des Teillichts (LBa) entspricht, auszugeben und die Ausgabe an die Steuereinheit (14) zu senden, und
**dadurch gekennzeichnet, dass**:
die Steuereinheit (14) dazu ausgestaltet ist, den Steuerzyklus einzustellen auf:
einen ersten Zyklus, wenn die Zielpunkposition auf eine Grenze zwischen dem ersten Kern (20a) und dem zweiten Kern (20b) der optischen Faser (20) eingestellt ist, wobei der erste Zyklus in Bezug auf einen zweiten Zyklus kurz ist, um die Häufigkeit des Ausführens der Steuerverarbeitung durch die Steuereinheit (14) zu erhöhen; und
den zweiten Zyklus länger als den ersten Zyklus, wenn die Zielpunktposition nicht auf die Grenze eingestellt ist, um die Häufigkeit des Ausführens der Steuerverarbeitung durch die Steuereinheit (14) zu vermindern.

2. Laservorrichtung nach Anspruch 1, wobei
wenn die Position des Punkts des Laserlichts (LB) am Ende der optischen Faser (20), die von der Profildetektionseinheit (103) detektiert wird, sich von der Zielpunktposition mit einer Differenz entfernt befindet, die größer als eine vorbestimmte Toleranz ist, die Steuereinheit (14) anomale Differenzinformationen zum Melden von Anomalie der Differenz ausgibt.

3. Laservorrichtung nach Anspruch 1 oder 2, wobei
wenn das von der Profildetektionseinheit (103) detektierte Strahlenprofil sogar durch Steuern des optischen Systems (102) nicht in der Lage ist, das gewünschte Strahlenprofil zu sein, die Steuereinheit (14) Unsteuerbarkeitsinformationen zum Melden von Unsteuerbarkeit ausgibt.

4. Laservorrichtung nach Anspruch 1, wobei
die Steuereinheit (14) den Steuerzyklus in Übereinstimmung mit Stabilität des von der Profildetektionseinheit (103) detektierten Strahlenprofils ändert.

5. Laservorrichtung nach Anspruch 1, ferner umfassend:
eine Temperaturdetektionseinheit, die dazu ausgestaltet ist, eine Umgebungstemperatur des optischen Systems (102) zu detektieren, wobei
die Steuereinheit (14) den Steuerzyklus in Übereinstimmung mit der von der Temperaturdetektionseinheit detektierten Temperatur ändert.

6. Laservorrichtung nach Anspruch 1, ferner umfassend:
eine Timer-Einheit, die dazu ausgestaltet ist, eine verstrichene Zeit nach einem Beginn des Antreibens der Laserquelle (101) zu messen, wobei
die Steuereinheit (14) den Steuerzyklus in Übereinstimmung mit der von der Timer-Einheit detektierten verstrichenen Zeit ändert.

7. Laservorrichtung nach einem der Ansprüche 1 bis 6, wobei
wenn das von der Profildetektionseinheit (103) detektierte Strahlenprofil nicht das gewünschte Strahlenprofil ist und die Steuereinheit (14) das optische System (102) mehr Male als ein Schwellenwert korrigiert hat, die Steuereinheit (14) anormale Korrekturinformationen zum Melden anormaler Korrektur ausgibt.

8. Verfahren zur Steuerung einer Laservorrichtung, die Folgendes umfasst: eine Laserquelle (101), die dazu ausgestaltet ist, Laserlicht (LB) zu emittieren; und ein optisches System (102), das dazu ausgestaltet ist, ein Ende einer optischen Faser (20), die einen ersten Kern (20a) und einen zweiten Kern (20b), der den ersten Kern (20a) umgibt, umfasst, mit dem Laserlicht (LB), das von der Laserquelle (101) emittiert wird, zu bestrahlen, und in der Lage ist, ein Strahlenprofil des Laserlichts (LB), das auf das Ende der optischen Faser (20) projiziert wird, zu ändern, wobei das Verfahren Folgendes umfasst:
Detektieren einer Position eines Punkts des Laserlichts (LB) am Ende der optischen Faser (20);
Steuern des optischen Systems (102) in jedem vorbestimmten Steuerzyklus, derart dass die Position des Punktes, die beim Detektieren detektiert wird, eine Zielpunktposition gemäß einem gewünschten Strahlenprofil ist, wobei ein Steuerzyklus ein Zyklus des Ausführens der Steuerverarbeitung ist, und
Anpassen des Steuerzyklus auf:
einen ersten Zyklus, wenn die Zielpunktposition auf eine Grenze zwischen dem ersten Kern (20a) und dem zweiten Kern (20b) der optischen Faser (20) eingestellt wird, wobei der erste Zyklus in Bezug auf einen zweiten Zyklus kurz ist, um die Häufigkeit des Ausführens der Steuerverarbeitung durch die Steuereinheit (14) zu erhöhen; und
den zweiten Zyklus länger als den ersten Zyklus, wenn die Zielpunktposition nicht auf die Grenze eingestellt ist, um die Häufigkeit des Ausführens der Steuerverarbeitung durch die Steuereinheit (14) zu vermindern.

## Revendications

1. Dispositif laser pour irradier un objet (20) à irradier avec une lumière laser (LB), le dispositif laser comprenant :
une source laser (101) configurée pour émettre la lumière laser (LB) ;
un système optique (102) configuré pour irradier l'objet (20) avec la lumière laser (LB) émise par la source laser (101), et en mesure de modifier un profil de faisceau de la lumière laser (LB) projetée sur l'objet (20) ;
une unité de détection de profil (103) configurée pour détecter le profil de faisceau de la lumière laser (LB) émise par le système optique (102) vers l'objet (20) ; et
une unité de commande (14) configurée pour réaliser un traitement de commande pour commander le système optique de sorte que le profil de faisceau détecté par l'unité de détection de profil soit un profil de faisceau souhaité dans chaque cycle de commande prédéterminé, un cycle de commande étant un cycle d'exécution du traitement de commande, dans lequel,
l'objet (20) est une fibre optique (20) comportant une première âme (20a) et une deuxième âme (20b) entourant la première âme (20a),
la lumière laser (LB) émise par le système optique (102) est configurée pour être projetée sur l'extrémité de la fibre optique (20),
le profil de faisceau détecté par l'unité de détection de profil (103) comporte une position d'un point de la lumière laser (LB) à l'extrémité de la fibre optique (20),
l'unité de commande (14) est configurée pour commander le système optique (102) de sorte que la position du point détecté par l'unité de détection de profil (103) soit une position de point cible selon le profil de faisceau souhaité,
l'unité de détection de profil (103) comporte
un miroir de réflexion partielle (500) configuré pour réfléchir une partie de la lumière laser (LB) allant du système optique (102) à l'extrémité de la fibre optique (20), et
un récepteur de lumière partielle (600) configuré pour recevoir la partie de la lumière laser (LB) réfléchie par le miroir de réflexion partielle (500), et configuré pour émettre alors un signal électrique correspondant aux conditions de réception de la lumière partielle (LBa) et pour transmettre la sortie à l'unité de commande (14), et **caractérisé en ce que** :
l'unité de commande (14) est configurée pour régler le cycle de commande sur :
un premier cycle, si la position de point cible est réglée sur une limite entre la première âme (20a) et la deuxième âme (20b) de la fibre optique (20), le premier cycle étant court avec par rapport à un deuxième cycle pour augmenter la fréquence d'exécution du traitement de commande par l'unité de commande (14) ; et
le deuxième cycle plus long que le premier cycle, si la position de point cible n'est pas réglée sur la limite, pour diminuer la fréquence d'exécution du traitement de commande par l'unité de commande (14).

2. Dispositif laser selon la revendication 1, dans lequel
si la position du point de la lumière laser (LB) à l'extrémité de la fibre optique (20) détecté par l'unité de détection de profil (103) s'éloigne de la position de point cible avec une différence supérieure à une tolérance prédéterminée, l'unité de commande (14) délivre des informations de différence anormale pour notifier l'anomalie de la différence.

3. Dispositif laser selon la revendication 1 ou 2, dans lequel
si le profil de faisceau détecté par l'unité de détection de profil (103) ne peut pas être le profil de faisceau souhaité même en commandant le système optique (102), l'unité de commande (14) délivre des informations de non possibilité de commande pour notifier la non possibilité de commande.

4. Dispositif laser selon la revendication 1, dans lequel
l'unité de commande (14) modifie le cycle de commande conformément à la stabilité du profil de faisceau détecté par l'unité de détection de profil (103).

5. Dispositif laser selon la revendication 1, comprenant en outre :
une unité de détection de la température configurée pour détecter une température ambiante du système optique (102), dans lequel
l'unité de commande (14) modifie le cycle de commande conformément à la température ambiante détectée par l'unité de détection de la température.

6. Dispositif laser selon la revendication 1, comprenant en outre :
une unité de temporisateur configurée pour mesurer un temps écoulé depuis le début de l'entraînement de la source laser (101), dans lequel
l'unité de commande (14) modifie le cycle de commande conformément au temps écoulé détecté par l'unité de temporisateur.

7. Dispositif laser selon l'une des revendications 1 à 6, dans lequel
si le profil de faisceau détecté par l'unité de détection de profil (103) n'est pas le profil de faisceau souhaité et que l'unité de commande (14) a corrigé le système optique (102) à des temps supérieurs à un seuil, l'unité de commande (14) délivre des informations de correction anormale pour notifier la correction anormale.

8. Procédé de commande d'un dispositif laser comportant : une source laser (101) configurée pour émettre une lumière laser (LB) ; et un système optique (102) configuré pour irradier une extrémité d'une fibre optique (20) comportant une première âme (20a) et une deuxième âme (20b) entourant la première âme (20a), avec la lumière laser (LB) émise par la source laser (101), et en mesure de modifier un profil de faisceau de la lumière laser (LB) projetée sur l'extrémité de la fibre optique (20), le procédé comprenant les étapes suivantes :
détecter une position d'un point de la lumière laser (LB) à l'extrémité de la fibre optique (20) ;
commander le système optique (102) dans chaque cycle de commande prédéterminé de sorte que la position du point détecté lors de la détection soit une position de point cible selon un profil de faisceau souhaité, un cycle de commande étant un cycle d'exécution du traitement de commande, et
régler le cycle de commande sur :
un premier cycle, si la position de point cible est réglée sur une limite entre la première âme (20a) et la deuxième âme (20b) de la fibre optique (20), le premier cycle étant court avec par rapport à un deuxième cycle pour augmenter la fréquence d'exécution du traitement de commande par l'unité de commande (14) ; et
le deuxième cycle plus long que le premier cycle, si la position de point cible n'est pas réglée sur la limite pour diminuer la fréquence d'exécution du traitement de commande par l'unité de commande (14).
